# FASCICULE DE BREVET EUROPEEN

(11) **EP 1 191 437 B1**
(45) Date de publication et mention de la délivrance du brevet: **19.03.2003**
(21) Numéro de dépôt: 01402386.5
(22) Date de dépôt: 18.09.2001
(51) Int. Cl.: G06F 9/455

(54) **Architecture de microprocesseur virtuel multiplate-forme et son système d'exploitation complémentaire, notamment pour le domaine de l'informatique embarquée et mobile**
Mehrplattform-Architektur eines virtuellen Mikroprozessors und Betriebssystem dafür insbesondere für eingebaute und mobile Rechnerumgebung
Multi-platform virtual microprocessor architecture and corresponding complementary operating system especially for on-board and mobile computer field

(30) Priorité: 20.09.2000 FR 0011995
(43) Date de publication de la demande: 27.03.2002
(73) Titulaire: Palmware, 31000 Toulouse (FR)
(72) Inventeur: Dehlinger, Patrick, 31240 L'Union (FR)
(74) Mandataire: Dupuis-Latour, Dominique

(56) Documents cités:
- EP-A- 0 137 191
- WO-A-98/59292
- FORD B ET AL: "MICROKERNELS MEET RECURSIVE VIRTUAL MACHINES" OPERATING SYSTEMS REVIEW (SIGOPS),US,ACM HEADQUARTER. NEW YORK, vol. 30, no. SPECIAL ISSUE, 21 décembre 1996 (1996-12-21), pages 137-151, XP000643509

## Description

L'invention concerne une nouvelle architecture de microprocesseur virtuel.

Les WO-A-98/59292 et EP-A-0 137 191 illustrent l'arrière-plan technologique de l'invention.

Par "microprocesseur virtuel" ou. "machine virtuelle", on entendra une configuration informatique apparaissant de l'extérieur comme une machine autonome, mais qui en fait inclut et intègre une machine hôte (encore dénommée "machine d'accueil" ou "plate-forme hôte") dont la machine virtuelle est un sur-ensemble.

La machine hôte comprend elle-même une plate-forme matérielle et une plate-forme logicielle.

La plate-forme matérielle comprend un microprocesseur physique ("microprocesseur hôte") et ses périphériques tels que mémoire, affichage et moyens d'introduction de données.

La plate-forme logicielle ou "système hôte" est bâtie autour d'un système d'exploitation particulier connu, qui pilote directement le microprocesseur hôte.

La machine virtuelle fonctionne en réponse à des instructions d'un programme écrit dans un langage qui lui est propre, et différent du langage spécifique de la machine hôte.

L'architecture de microprocesseur virtuel de l'invention, comme on le verra, est particulièrement bien adaptée à un environnement matériel d'accueil avec des ressources informatiques réduites (mémoire, vitesse d'horloge, absence de stockage de masse), comme cela est le cas dans les ordinateurs de poche du type "palmtop computer" ou "PDA", ou encore les téléphones cellulaires incluant des fonctions de traitement de données (WAP, GPRS, etc.), les décodeurs de télévisions externes (de type "set-top box") ou intégrés à un téléviseur, et de façon générale les divers produits d'électronique grand public et/ou d'informatique de poche intégrant des fonctions mises en oeuvre par des moyens informatiques.

Ces différents produits sont habituellement désignés sous le vocable générique d"'informatique embarquée et mobile", qui constitue le champ d'application privilégié de l'invention.

Le domaine de l'informatique embarquée et mobile est confronté à une multiplicité de systèmes d'exploitation différents et incompatibles, ainsi qu'à une grande variété de plates-formes matérielles.

On peut ainsi citer, parmi les différentes plates-formes ou systèmes d'exploitation existants : *EPOC* du consortium Symbian, *Windows CE* et *Windows NT for embedded* de Microsoft, *PalmOS* de Palm Computing, *BeOS* de BeInc, *QNX* d'IBM, ainsi que divers OS (systèmes d'exploitation) "propriétaires" spécifiques à divers constructeurs tels que Casio, Texas Instruments, Sharp, etc. (les diverses dénominations citées sont des marques déposées par leur titulaires respectifs).

Cette multiplicité des plates-formes va à l'encontre des impératifs actuels du marché de l'informatique embarquée et mobile, marché qui est guidé par des besoins d'homogénéité, de simplicité et de réduction des coûts de revient.

Par ailleurs, la portabilité des applications d'une plate-forme à l'autre est également un besoin permanent des développeurs d'applications, qui cherchent à réduire le plus possible le travail d'adaptation d'un logiciel applicatif lors du passage d'une plate-forme à une autre.

À cet effet, l'invention propose une nouvelle architecture de machine virtuelle particulièrement adaptée à l'informatique embarquée et mobile, et incluant un "middleware" (logiciel médiateur) fonctionnant en symbiose, et parallèlement, avec le système d'exploitation hôte de la machine.

Essentiellement, l'architecture de l'invention repose sur un processeur virtuel et un quasi-système d'exploitation pouvant comprendre un moteur de base de données, un gestionnaire de fichiers, un BIOS (*Basic Input*/*Output Operating System,* Système d'Exploitation des Entrées-Sorties de Base), des gestionnaires de communication, d'affichage et de clavier et éventuellement un protocole TCP/IP. Ce processeur virtuel se greffe entre le système d'exploitation principal hôte et le BIOS de la machine hôte, fonctionnant en symbiose avec ces derniers et en ne consommant que très peu de capacité mémoire.

Comme on le verra, cette machine virtuelle est conçue de manière à être multiplate-forme, c'est-à-dire à ne requérir qu'un minimum de modifications pour passer d'un système d'exploitation hôte à un autre.

Ce caractère multiplate-forme permet de garantir :
- la pérennité des applications développées, quelles que soient les évolutions logicielles et matérielles ;
- l'intégrité de la plate-forme matérielle et logicielle hôte, la partie de logiciel médiateur de l'invention étant complémentaire de celle-ci mais ne venant pas s'y substituer ; ainsi les logiciels applicatifs fonctionnant sur la machine virtuelle de l'invention ne pourront pas perturber le système d'exploitation hôte, permettant de bien séparer les rôles de chacun de ces éléments ;
- l'ouverture des systèmes d'exploitation propriétaires aux dernières innovations technologiques par l'incorporation d'un logiciel médiateur permettant de conférer à l'ensemble l'architecture selon l'invention. Ainsi, une machine virtuelle selon l'invention implantée dans un téléphone dont le système est fermé permettra de faire fonctionner toutes les applications développées pour la machine virtuelle de l'invention sur les autres plates-formes, par exemple d'apporter à ce téléphone les dernières fonctionnalités développées sur d'autres téléphones plus récents ;
- enfin et surtout, l'architecture de l'invention permet, grâce à des outils de développement adaptés, d'accélérer de manière très importante les cycles de développement de produits nouveaux en facilitant la conception des applications et leur portage d'une plate-forme à une autre.

Il existe certes des systèmes logiciels permettant une communication interplate-formes, comme JAVA (marque déposée de Sun Microsystems) ou WAP. Ces systèmes sont cependant différents de la proposition de l'invention, et peuvent d'ailleurs être utilisés en complément de cette dernière. En effet, à la différence par exemple des logiciels JAVA, la machine virtuelle de l'invention constitue, comme on le verra, un ordinateur virtuel avec sa propre pile mémoire et sa propre base de données, et dispose donc de fonctionnalités supplémentaires. De plus et surtout, l'ordinateur virtuel de l'invention peut, comme un ordinateur réel, être programmé dans différents langages, à la différence de JAVA (ou de produits similaires) qui est indissociablement lié à la structure de la machine virtuelle JAVA.

En ce qui concerne les ressources nécessaires pour faire fonctionner la machine virtuelle de l'invention, les minima requis sont inférieurs à 64 Ko de mémoire morte et 20 Ko de mémoire vive, et la machine virtuelle peut être réalisée autour de processeurs 8 bits avec des vitesses d'horloge de moins de 3 MHz.

Ces valeurs sont tout à fait compatibles avec celles rencontrées dans l'informatique embarquée et mobile, par exemple les téléphones mobiles, par opposition aux micro-ordinateurs classiques, portables ou de bureau, où il est nécessaire par exemple de disposer d'au moins 400 Mo de mémoire disque et 32 Mo de mémoire vive pour faire fonctionner des systèmes d'exploitation tels que Windows NT, avec en outre des performances très médiocres en termes de rapidité.

Plus précisément, la présente invention propose un microprocesseur virtuel multiplate-forme et son système d'exploitation complémentaire, comprenant , en combinaison :
- une machine d'accueil avec : une plate-forme matérielle comprenant un microprocesseur physique hôte ; une plate-forme logicielle comprenant un système d'exploitation hôte, des modules gestionnaires de mémoire et de matériel, et d'éventuelles applications natives ;
- des moyens médiateurs comportant :
   - un noyau implémentant des fonctions de bas niveau comprenant un IOCS/BIOS, un gestionnaire de mémoire distinct du gestionnaire de mémoire de la plate-forme hôte et un gestionnaire des piles des moyens médiateurs, ce noyau incluant une interface avec (i) ledit système d'exploitation hôte, (ii) lesdits modules gestionnaires de mémoire et de matériel, et (iii) lesdites éventuelles applications natives,
   - une API apte à recevoir des instructions exécutables formulées dans un langage indépendant du microprocesseur et du système hôte, le microprocesseur virtuel opérant en réponse à ces instructions exécutables,
   - des modules fonctionnels de haut niveau interfacés (i) entre eux, (ii) avec l'API et (iii) avec le noyau, et
   - des moyens pour transcrire le code desdites instructions exécutables en code de bas niveau directement exécutable sur le microprocesseur hôte ;

Tout échange de données entre les moyens médiateurs et la plate-forme logicielle est opéré via ladite interface du noyau, et l'ensemble des moyens médiateurs, à l'exception de ladite interface du noyau, est codé en un langage indépendant de la machine d'accueil.

Selon diverses caractéristiques subsidiaires avantageuses :
- le code du logiciel médiateur est incorporé dans une mémoire morte, ou une mémoire flash de microcontrôleur ;
- lesdits moyens pour transcrire le code des instructions exécutables en code de bas niveau directement exécutable sur le microprocesseur hôte comprennent un translateur de code, un compilateur à la volée et/ou un convertisseur de byte-code ;
- lesdites fonctions de bas niveau implémentées par le noyau peuvent comprendre en outre, une gestion d'interface utilisateur graphique intégrée indépendante du système d'exploitation hôte et/ou des fonctions de : allocation/désallocation d'une zone mémoire partagée entre plusieurs applications, sémaphore inter-thread, création et suppression de thread, création et suppression de temporisation, écriture et lecture de type RAW vers un pilote vidéo, gestion de périphérique d'entrée de clavier matériel ou logiciel, gestion de périphérique de pointage, gestion de périphérique de sortie pour liaison matérielle, économie d'énergie, et/ou accès à un système de stockage de masse ;
- lesdits modules fonctionnels de haut niveau sont des modules aptes à implémenter des fonctions de : gestion d'un système de fichiers, moteur de base de données, communication avec l'extérieur, pile TCP/IP, gestion d'imprimante, lecteur de livre électronique, module hypertexte, gestionnaire d'interface graphique et module graphique, outils et librairie de fonctions auxiliaires et/ou interface d'appel vers un système local ;
- les moyens médiateurs sont des moyens aptes à être mis en oeuvre en mode superviseur du système d'exploitation.

On va maintenant décrire un exempte de réalisation, en référence à la figure unique annexée qui est un synoptique illustrant l'architecture de la machine virtuelle selon l'invention.

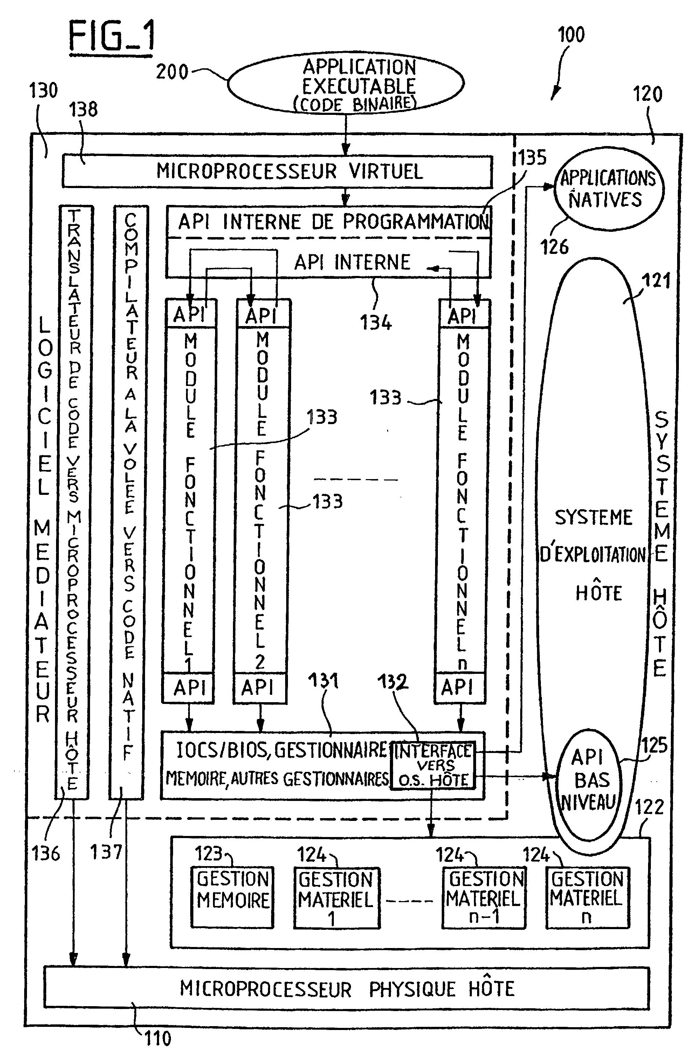

Sur la figure 1, la référence 100 désigne, de façon générale, la machine virtuelle selon l'invention, qui fonctionne en réponse à des instructions de programme d'une application exécutable 200.

L'application exécutable 200 est en un code binaire propre à la machine virtuelle, mais ce code binaire peut être obtenu à partir d'un langage de haut niveau et n'est pas lié à un langage spécifique.

Ainsi, les langages tels que JAVA, C, C++, BASIC, HTML, WML, etc. sont utilisables, et une application écrite dans l'un de ces langages sera traitée au moyen d'un outil de développement comprenant un assembleur et un compilateur (ainsi qu'un convertisseur de byte-code JAVA, s'il y a lieu), pour donner le code binaire exécutable appliqué directement au microprocesseur de la machine virtuelle de l'invention.

Cet outil de développement peut être le cas échéant incorporé à la machine virtuelle proprement dite, celle-ci intégrant alors par exemple un convertisseur de byte-code JAVA pour permettre la traduction directe du programme écrit en JAVA en code exécutable par la machine virtuelle.

Par ailleurs, le langage de la machine virtuelle de l'invention est universel en ce sens qu'il est indépendant de la plate-forme sur laquelle il est exécuté, tant matérielle (type de microprocesseur) que logicielle (système d'exploitation hôte).

Cette caractéristique "multiplate-forme" est un avantage essentiel procuré par la présente invention, qui permet donc le développement d'applications sûres, hautement performantes et robustes sur des plates-formes multiples fermées ou au sein de réseaux hétérogènes sans être liées à un langage spécifique.

Ces applications pourront ainsi être exécutées sur une plate-forme quelconque sans avoir besoin de connaître le système d'exploitation hôte ou l'environnement matériel d'accueil, en particulier le microprocesseur et les périphériques d'entrée-sortie.

De plus, grâce à la structure de machine virtuelle que l'on va décrire, ces applications pourront être exécutées sur des machines à ressources limitées comme dans le cas des ordinateurs de poche (PDA), des téléphones portables ou encore des téléviseurs, décodeurs ou dispositifs semblables, car la machine virtuelle est conçue de manière à consommer le strict minimum de puissance sur la machine locale, tant en ce qui concerne la mémoire (typiquement moins de 64 Ko de mémoire morte et 20 Ko de mémoire vive) que les performances du microprocesseur (la machine virtuelle peut accepter les processeurs 8 bits avec des vitesses d'horloge inférieures à 3 MHz).

La machine virtuelle 100 comporte, essentiellement :
- une plate-forme matérielle constituée d'un microprocesseur physique hôte 110, qui peut être indifféremment un microprocesseur de type RISC ou CISC (*Reduced*/*Complex Instruction Set Computer,* Ordinateur à Jeu d'Instructions Réduit/Complexe) ;
- une plate-forme logicielle hôte 120, réalisée autour d'un système d'exploitation hôte 121 d'un type classique préexistant, non modifié ;
- un "middleware" (logiciel médiateur) 130, coopérant d'une part avec la plate-forme matérielle et logicielle 110, 120 et, d'autre part, avec l'application 200 dont il reçoit des instructions de programme exécutables, en code binaire adapté au microprocesseur virtuel 138.

La plate-forme matérielle et logicielle 110, 120 est une plate-forme préexistante, déjà intégrée à l'appareil en question (ordinateur de poche, téléphone, décodeur, etc.) ; elle n'est en aucune façon modifiée et elle est réutilisée pour la mise en oeuvre de la machine virtuelle de l'invention, dont elle est un élément nécessaire au fonctionnement.

Plus précisément, la plate-forme logicielle hôte ou système hôte 120 comprend, outre le système d'exploitation hôte 121 au sens strict, une unité de gestion de la mémoire MMU (*Memory Management Unit*, Unité de Gestion de la Mémoire) 123, ainsi qu'un certain nombre de gestionnaires de matériel 124 optionnels tels que gestion vidéo, gestion d'un clavier, gestionnaire multitâche, gestion des entrées (souris, stylo, entrée vocale ou autre).

L'ensemble de ces modules constitue un micro-noyau 122 interfacé avec le système d'exploitation hôte 121 par une API (*Application Programming Interface,* Interface de Programmation d'Application) de bas niveau 125. La plate-forme hôte peut également inclure des applications natives 126, qui seront gérées de la même manière que le système d'exploitation hôte 120.

Le système d'exploitation hôte est un système d'exploitation connu, parmi lesquels on peut citer, en ce qui concerne les systèmes adaptés à l'informatique embarquée et mobile : *Windows CE* dans ses différentes versions, *Epoc 32, Epoc 16*, *Synergie, PalmOs*, les systèmes "propriétaires" tels que ceux de Casio, Texas, Sharp, etc., et également les systèmes d'exploitation traditionnels tels que *Windows 3.1, 95, 98, NT*, ou *Linux* (les dénominations citées sont des marques déposées par leurs titulaires respectifs).

En dehors du cadre en trait plein épais délimitant la machine virtuelle 100 de l'invention (englobant les éléments 110, 120 et 130), toutes les applications conçues pour la machine virtuelle de l'invention sont indépendantes de la plate-forme qui les mettra en oeuvre, tant matérielle (microprocesseur 110 et circuits associés) que logicielle (système hôte 120).

La ligne en tiretés délimite, en bas et à droite, l'ensemble des éléments réutilisés préexistants (plate-forme matérielle 110 et logicielle 120) et, en haut et à gauche, le logiciel médiateur 130 de l'invention permettant l'adaptation aux différentes configurations, pour l'exécution d'une application exécutable écrite indépendamment de la plate-forme considérée.

Ce logiciel médiateur 130 est bâti autour d'une couche basse 131 formant noyau et contenant des fonctions de bas niveau requises par la machine virtuelle de l'invention.

Ce noyau 131 contient un IOCS/BIOS (*Input-Output Commun System* / *Basic Input-Output Opération System*, Système Commun aux Entrées-Sorties / Système d'Exploitation des Entrées-Sorties de Base), ainsi qu'un gestionnaire de mémoire (distinct du gestionnaire de mémoire de la plate-forme hôte) ainsi qu'un gestionnaire des piles du logiciel 130 et d'autres gestionnaires qu'il peut être avantageux de prévoir.

Plus précisément, le noyau 131 doit permettre de faire fonctionner le logiciel médiateur 130 de façon autonome dans certaines circonstances, par exemple pour la gestion d'un périphérique dépourvu de système d'exploitation hôte.

Pour ce faire, le noyau 131 doit permettre :
- le lancement du logiciel médiateur par le système (appel d'un point d'entrée par le système) ;
- l'accès horloge, typiquement par incrément minimum d'une seconde ;
- l'allocation d'une zone mémoire continue, typiquement d'un minimum de 20 Ko de mémoire vive ;
- en cas de système à optimisation mémoire automatique, ou d'un système à allocation mémoire au travers d'un moteur de base de données, la possibilité de verrouiller au minimum une zone mémoire de 20 Ko.

Le noyau 131 n'a pas besoin d'une MMU, mais peut utiliser une MMU pour faire apparaître en contigu plusieurs types de mémoires physiques disjointes, simplifiant ainsi l'allocation mémoire. Dans tous les cas, le noyau fournira une zone mémoire programme continue, en présence ou en l'absence d'une MMU.

D'autres fonctions peuvent éventuellement être intégrées au noyau 131 pour en assurer le support, telles que :
- allocation/désallocation d'une zone mémoire partagée entre plusieurs applications ;
- sémaphore "inter-thread", création et suppression de "thread" (chaînage dans le cas d'un fonctionnement multitâche) ;
- création et suppression de temporisation ;
- écriture et lecture de type RAW vers un pilote vidéo ;
- périphérique d'entrée clavier (clavier matériel ou logiciel) ;
- périphérique de pointage (stylo, souris, entrée vocale ou autre), avec possibilité d'accéder directement à la couche matérielle ou fournir une émulation logicielle à partir d'un autre périphérique. En cas d'interaction avec un utilisateur, un moyen d'entrée doit être disponible (interface série, infrarouge ou autre) ;
- périphérique de sortie pour liaison matérielle (liaison série, réseau, infrarouge ou autre) ;
- fonctions d'économie d'énergie ;
- accès au système de stockage de masse éventuel, avec possibilité de fournir un support de disque virtuel géré en RAM ou en mémoire flash,
- fonction de sortie sonore si l'appareil le permet.

Le noyau 131 est configuré de manière à ce que seulement une partie très réduite du code, représentée en 132 (interface vers le système d'exploitation hôte) soit spécifique à la plate-forme hôte ; pour le reste, le noyau est indépendant de la plate-forme utilisée, et peut-être écrit en un langage de programmation classique (par exemple en C). Il en est de même pour le reste de la machine virtuelle de sorte que, pour porter celle-ci sur une nouvelle plate-forme, il ne sera nécessaire que d'adapter très peu de code, typiquement une quinzaine de fonctions, le reste du code ne variant pas. Il est également possible d'intégrer des spécificités lors de cas particuliers, par exemple la présence de plusieurs processeurs dans un même appareil ou de DSPs (*Digital Signal Processors*, Processeurs Numériques de Signaux) spécifiques, par exemple dans le domaine du traitement vidéo ou de la téléphonie.

L'interface 132 communique avec le système hôte et constitue le point de passage obligé pour tout échange de données ou appels du logiciel médiateur 130 avec la plate-forme d'accueil. C'est cette interface qui assure la communication :
- avec le système d'exploitation hôte 121 via l'API de bas niveau 125,
- avec les applications natives 126, le cas échéant, et
- avec le micro-noyau et gestionnaire de matériel 122 du système d'exploitation hôte.

En d'autres termes, à chaque appel vers le système hôte, qu'il s'agisse d'une opération interne au logiciel médiateur 130 ou de l'exécution d'une instruction de l'application exécutable 200, cette appel devra transiter par l'interface 132, qui est la seule partie dépendante de la plate-forme hôte.

Aucune des caractéristiques fournies par le logiciel médiateur 130 directement ou indirectement n'impose d'exigences particulières sur le système d'exploitation hôte 120. Ainsi, si un service du système d'exploitation 120 est indisponible ou différent, une solution de remplacement ou de complément sera automatiquement fournie par le logiciel médiateur 130. De plus, ce dernier, qui gère ses propres piles et inclut sa propre gestion mémoire, n'utilise pas le système de gestion mémoire hôte si celui-ci n'est pas disponible. Il comprend également un système de simulation d'interruption au cas où le système hôte ne peut en fournir.

Le système de gestion graphique intégré peut fournir une GUI (*Graphical User Interface,* Interface Utilisateur Graphique) indépendante du système d'exploitation hôte, pour mettre en oeuvre de façon uniforme des graphiques et des fenêtrages, et une police de caractères constante et identique sur tous les systèmes hôtes.

Par ailleurs, le noyau 131 est associé à une série de modules fonctionnels 133, avec lesquels il communique par l'intermédiaire d'APIs standardisées. Une API interne 134 autorise la communication entre modules 133 et une autre API 135 assure l'interfaçage pour la programmation.

Chacun des modules 133 assure une fonction particulière, qui peut être notamment :
- gestion d'un système de fichiers (FAT et VFAT),
- moteur de base de données,
- modules de communication,
- pile TCP/IP,
- gestion d'imprimante,
- lecteur de livre électronique et module hypertexte,
- gestionnaire d'interface graphique et module graphique,
- outils et librairie de fonctions diverses,
- interface d'appel vers un système local.

La structure modulaire et l'indépendance par rapport à la plate-forme permettent un enrichissement et une amélioration constants de ces différentes fonctions sans remise en cause ni de l'architecture ni de l'écriture du reste du système. Comme on l'a déjà indiqué plus haut, une seule tâche est nécessaire pour mettre la machine virtuelle en adéquation avec un système d'exploitation hôte particulier, à savoir le portage de la partie spécifique 132 en fonction des ressources disponibles ou autorisées par la plate-forme hôte.

Par ailleurs, la structure modulaire permet par exemple, si nécessaire ou pour améliorer la vitesse d'exécution, d'utiliser un pilote de périphérique spécifique à la machine virtuelle de l'invention en lieu et place du pilote du système hôte et ceci, sans avoir à adapter ce pilote particulier à la plate-forme en question.

De façon générale, cette structure modulaire permet de doter la machine virtuelle de l'invention d'un certain nombre de fonctionnalités intégrées de manière native, indépendamment de la plate-forme d'accueil, tout en conservant la possibilité d'utiliser en pratique les ressources du système hôte (si elles existent), qui fonctionnent toujours parallèlement à celles du logiciel médiateur.

Inversement, si le système hôte possède des caractéristiques qui lui sont propres, la machine virtuelle de l'invention peut, de manière transparente pour les applications conçues pour elle, utiliser ces caractéristiques à la place de celles intégrées dans le logiciel médiateur.

L'ensemble du code du logiciel médiateur 130 est écrit dans un langage indépendant de la machine, par exemple en langage C, et peut avantageusement être incorporé dans une mémoire morte. Étant conçu pour s'exécuter localement, il ne demande donc pas à être chargé en mémoire vive (sauf contrainte particulière du système d'exploitation hôte), d'où un gain très important de place mémoire et de rapidité.

Au lancement, une à cinq zones de mémoire sont allouées, y compris une zone pour la pile propre au logiciel 130 ainsi que les pilotes gestionnaires des périphériques. Le code de démarrage gère également les systèmes de configuration du matériel qu'il a détectés dans les pilotes correspondants.

La machine virtuelle de l'invention fournit un environnement de fonctionnement contrôlé et plus sûr qu'un système natif. De ce fait, le système dans son intégralité, y compris le téléchargement des applications exécutables ou la mise à jour de la machine virtuelle, peut être exécuté dans le mode superviseur du système. Le fait de travailler en mode superviseur uniquement et sans qu'il soit nécessaire d'avoir une MMU permet de simplifier la machine virtuelle de l'invention et la rendre plus efficace que les systèmes virtuels traditionnels.

L'invention prévoit enfin des moyens pour transcrire le code binaire 200 de la machine virtuelle en code de bas niveau directement exécutable sur le processeur physique 110.

Un premier moyen consiste à prévoir un interpréteur de code 136, plus précisément un translateur de code, générant des instructions de bas niveau à partir du code binaire et donc identiques à une stratégie de microprocesseur physique.

L'autre moyen consiste à utiliser un compilateur à la volée 137. Ce dernier produit un résultat identique, mais le traitement est exécuté une seule fois au lancement de l'application, et non à chaque instruction. Le code devient donc identique au code exécutable nativement sans qu'il soit nécessaire de l'interpréter, avec un gain important de vitesse.

Le compilateur à la volée ou le translateur de code sont écrits dans un langage indépendant de la machine, par exemple en langage C.

Avantageusement, le microprocesseur virtuel 138 peut basculer à la volée d'un mode interprété (en utilisant le module 136) vers un mode natif du processeur 110, à tout instant, les ordres de bascule qui lui sont fournis étant intégrés à l'application exécutable 200. On notera que dans ce cas le module 137 (compilateur à la volée vers code natif) n'est ni utilisé ni nécessaire - il est donc optionnel (en d'autres termes, l'un des deux modules 136 et 137 au moins est nécessaire à la mise en oeuvre du système).

## Revendications

1. Un microprocesseur virtuel (100) multiplate-forme et son système d'exploitation complémentaire, destiné notamment au domaine de l'informatique embarquée et mobile,
**caractérisée en ce qu'**il comprend, en combinaison :
- une machine d'accueil avec :
- une plate-forme matérielle (110) comprenant un microprocesseur physique hôte,
- une plate-forme logicielle (120) comprenant :
. un système d'exploitation hôte (121),
. des modules gestionnaires de mémoire (123) et de matériel (124), et
. d'éventuelles applications natives (126) ;
- des moyens médiateurs (130) comportant :
- un noyau (131) implémentant des fonctions de bas niveau comprenant un IOCS/BIOS, un gestionnaire de mémoire distinct du gestionnaire de mémoire de la plate-forme hôte et un gestionnaire des piles des moyens médiateurs, ce noyau incluant une interface (132) avec (i) ledit système d'exploitation hôte, (ii) lesdits modules gestionnaires de mémoire et de matériel, et (iii) lesdites éventuelles applications natives,
- une API (134, 135) apte à recevoir des instructions exécutables (200) formulées dans un langage indépendant du microprocesseur et du système hôte, le microprocesseur virtuel opérant en réponse à ces instructions exécutables,
- des modules fonctionnels de haut niveau (133) interfacés (i) entre eux, (ii) avec l'API et (iii) avec le noyau, et
- des moyens (136, 137) pour transcrire le code desdites instructions exécutables en code de bas niveau directement exécutable sur le microprocesseur hôte ;
**en ce que** tout échange de données entre les moyens médiateurs (130) et la plate-forme logicielle (120) est opéré via ladite interface (132) du noyau (131),
et **en ce que** l'ensemble des moyens médiateurs, à l'exception de ladite interface du noyau, est codé en un langage indépendant de la machine d'accueil.

2. Le microprocesseur virtuel et son système d'exploitation complémentaire de la revendication 1, où le code du logiciel médiateur est incorporé dans une mémoire morte, ou une mémoire flash de microcontrôleur.

3. Le microprocesseur virtuel et son système d'exploitation complémentaire de la revendication 1, où lesdits moyens pour transcrire le code des instructions exécutables en code de bas niveau directement exécutable sur le microprocesseur hôte sont des moyens du groupe comprenant : un translateur de code (136); et un compilateur à la volée (137).

4. Le microprocesseur virtuel et son système d'exploitation complémentaire de la revendication 1, où lesdits moyens pour transcrire le code des instructions exécutables en code de bas niveau directement exécutable sur le microprocesseur hôte comprennent un convertisseur de byte-code.

5. Le microprocesseur virtuel et son système d'exploitation complémentaire de la revendication 1, où lesdites fonctions de bas niveau implémentées par le noyau (131) incluent en outre une gestion d'interface utilisateur graphique intégrée indépendante du système d'exploitation hôte.

6. Le microprocesseur virtuel et son système d'exploitation complémentaire de la revendication 1, où lesdites fonctions de bas niveau implémentées par le noyau (131) incluent en outre des fonctions du groupe comprenant : allocation/désallocation d'une zone mémoire partagée entre plusieurs applications ; sémaphore inter-thread ; création et suppression de thread ; création et suppression de temporisation ; écriture et lecture de type RAW vers un pilote vidéo ; gestion de périphérique d'entrée de clavier matériel ou logiciel ; gestion de périphérique de pointage ; gestion de de périphérique de sortie pour liaison matérielle ; économie d'énergie ; accès à un système de stockage de masse.

7. Le microprocesseur virtuel et son système d'exploitation complémentaire de la revendication 1, où lesdits modules fonctionnels de haut niveau (133) sont des modules aptes à implémenter des fonctions du groupe comprenant : gestion d'un système de fichiers ; moteur de base de données ; communication avec i'exiérieur ; pile TCP/IP ; gestion d'imprimante ; lecteur de livre électronique ; module hypertexte ; gestionnaire d'interface graphique et module graphique ; outils et librairie de fonctions auxiliaires ; interface d'appel vers un système local.

8. Le microprocesseur virtuel et son système d'exploitation complémentaire de la revendication 1, où les moyens médiateurs sont des moyens aptes à être mis en oeuvre en mode superviseur du système d'exploitation.

## Claims

1. A multiplatform virtual microprocessor (100) and its corresponding operating system, for use in particular in the field of on-board mobile computing.
**characterized in that** it comprises in combination:
- a host machine with:
- a hardware platform (110) comprising a host physical microprocessor; and
- a software platform (120) comprising:
- a host operating system (121);
- memory and hardware driver modules (123, 124); and
- optional native applications (126):
- middlewear means (130) comprising:
- a kernel (131) implementing low level functions comprising an IOCS/BIOS, a memory manager distinct from the memory manager of the host platform, and a manager of the stacks of the middlewear means, said kernel including an interface (132) with (i) said host operating system, (ii) said memory and hardware manager modules, and (iii) said optional native applications;
- an API (134, 135) suitable for receiving executable instructions (200) formulated in a language independent of the microprocessor and of the host system, the virtual microprocessor operating in response to said executable instructions;
- high level functional modules (133) interfaced (i) between one another, (ii) with the API, and (iii) with the kemel; and
- means (136, 137) for transcribing the code of said executable instructions into low level code directly executable on the host microprocessor;
and **in that** all exchange of data between the middlewear means (130) and the software platform (120) takes place via said interface (132) of the kernel (131); and
**in that** all of the middlewear means, with the exception of said kernel interface, is encoded in a language that is independent of the host machine.

2. The virtual microprocessor and its corresponding operating system of claim 1, in which the code of the middlewear is incorporated in a read-only memory, or a microcontroller flash memory.

3. The virtual microprocessor and its corresponding operating system of claim 1, in which said means for transcribing the code of the executable instructions into low level code that is directly executable on the host microprocessor are means taken from the group comprising: a code translator (136); and a just-in-time compiler (137).

4. The virtual microprocessor and its corresponding operating system of claim 1, in which said means for transcribing the code of the executable instructions into low level code directly executable on the host microprocessor comprise a byte-code converter.

5. The virtual microprocessor and its corresponding operating system of claim 1, in which the low level functions implemented by the kernel (131) further include managing an integrated graphics user interface independent of the host operating system.

6. The virtual microprocessor and its corresponding operating system of claim 1, in which said low level functions implemented by the kernel (131) further include functions of the group comprising: allocating/deallocating a shared memory zone between a plurality of applications; inter-thread semaphore; creating and deleting thread; creating and deleting timing; RAW type reading and writing to a video driver; managing a hardware or software keyboard input peripheral; managing a pointer peripheral; managing an output peripheral for a hardware link; energy saving; access to a mass storage system.

7. The virtual microprocessor and its corresponding operating system of claim 1, in which said high level functional modules (133) are modules suitable for implementing functions from the group comprising: managing a file system; a database engine; communicating with the outside; a TCP/IP stack; managing a printer; reading an electronic book; a hypertext module; managing a graphics interface and a graphics module; tools and a library of auxiliary functions; an interface for making calls to a local system.

8. The virtual microprocessor and its corresponding operating system of claim 1, in which the middlewear means are means suitable for being implemented in supervisor mode of the operating system.

## Patentansprüche

1. Virtueller Multiplattform-Mikroprozessor (100) und sein komplementäres Betriebssystem, bestimmt insbesondere für das Gebiet der mitgeführten und mobilen Informatik,
**dadurch gekennzeichnet, dass** er aufweist, in Kombination:
- eine Empfangsmaschine mit:
- eine Hardware-Plattform (110), welche einen physischen Host-Mikroprozessor umfasst,
- eine Software-Plattform (120), aufweisend:
• ein Host-Betriebssystem (121),
• Verwaltungsmodule von Speicher (123) und von Hardware (124), und
• von eventuellen nativen Anwendungen (126);
- Ausgleichsmittel (130), aufweisend:
- einen Kern (131), der Niedrigniveau-Funktionen implementiert, umfassend ein IOCS/BIOS, eine Speicherverwaltung, unterschiedlich von der Speicherverwaltung des Speichers der Host-Plattform und eine Verwaltung der Stapel der Ausgleichsmittel, wobei der Kern eine Schnittstelle (132) einschließt mit (i) dem Host-Betriebssystem, (ii) den Verwaltungsmodulen von Speicher und von Hardware und (iii) den eventuellen nativen Anwendungen,
- eine API (134, 135), geeignet, ausführbare Instruktionen (200) zu empfangen, formuliert in einer von dem Mikroprozessor und von dem Host-System unabhängigen Sprache, wobei der virtuelle Mikroprozessor in Antwort auf die ausführbaren Instruktionen arbeitet,
- Hochniveau-Funktionsmodule (133), schnittstellenmäßig geschaltet (i) untereinander, (ii) mit der API und (iii) mit dem Kern, und
- Mittel (136, 137) zum Transkribieren des Codes der ausführbaren Instruktionen in direkt auf dem Host-Mikroprozessor ausführbaren Niedrigniveau-Code;
dass jeglicher Datenaustausch zwischen den Ausgleichsmitteln (130) und der Software-Plattform (120) über die Schnittstelle (132) des Kerns (131) getätigt wird,
und dass die Gesamtheit der Ausgleichsmittel, mit Ausnahme der Schnittstelle des Kerns, in einer von der Empfangsmaschine unabhängigen Sprache kodiert ist.

2. Virtueller Mikroprozessor und sein komplementäres Betriebssystem gemäß Anspruch 1, wobei der Code der Ausgleichssoftware inkorporiert ist in einen Nur-Lese-Speicher oder einen Mikrocontroller-Flash-Speicher.

3. Virtueller Mikroprozessor und sein komplementäres Betriebssystem gemäß Anspruch 1, wobei die Mittel zum Transkribieren des Codes der ausführbaren Instruktionen in auf dem Host-Mikroprozessor direkt ausführbaren Niedrigniveau-Codemittel der Gruppe sind, welche aufweist: einen Code-Übersetzer (136); und einen On-the Flight-Compiler (137).

4. Virtueller Mikroprozessor und sein komplementäres Betriebssystem gemäß Anspruch 1, wobei die Mittel zum Transkribieren der ausführbaren Instruktionen in auf dem Host-Mikroprozessor direkt ausführbaren Niedrigniveau-Code einen Byte-Code-Umwandler umfassen.

5. Virtueller Mikroprozessor und sein komplementäres Betriebssystem gemäß Anspruch 1, wobei die Niedrigniveau-Funktionen, implementiert durch den Kern (131) des Weiteren eine integrierte graphische Benutzer-Schnittstellenverwaltung unabhängig von dem Host-Betriebssystem einschließen.

6. Virtueller Mikroprozessor und sein komplementäres Betriebssystem gemäß Anspruch 1, wobei die Niedrigniveau-Funktionen, implementiert durch den Kern (131) des Weiteren Funktionen der Gruppe aufweist, aufweisend: Allokation/Freigabe einer Speicherzone, geteilt unter mehreren Anwendungen; Inter-Thread-Semaphore; Thread-Erzeugung und - Unterdrückung; Zeitgabe-Erzeugung und -Unterdrückung; Schreiben und Lesen vom Typ RAW gegen ein Pilot-Video; Hardware- oder Software-Tastatureingabe-Peripherieverwaltung; Zeiger-Peripherieverwaltung; Ausgangs-Peripherieverwaltung für Hardware-Verbindung; Energieeinsparung; Zugriff auf ein Massenspeichersystem.

7. Virtueller Mikroprozessor und sein komplementäres Betriebssystem gemäß Anspruch 1, wobei die Hochniveau-Funktionsmodule (133) Module sind, die geeignet sind zum Implementieren der Funktionen der Gruppe, aufweisend: Verwaltung eines Dateiensystems; Datenbankmaschine; Kommunikation mit dem Äußeren; TCP/IP-Stapel; Druckerverwaltung; elektronischer Buchleser; Hypertext-Modul; graphische Schnittstellenverwaltung und Graphikmodul; Werkzeuge und Bibliothek von Hilfsfunktionen; Aufrufschnittstelle gegen ein lokales System.

8. Virtueller Mikroprozessor und sein komplementäres Betriebssystem gemäß Anspruch 1, wobei die Ausgleichsmodule Mittel sind, die geeignet sind, in Betrieb gesetzt zu werden im Überwachungsmodus des Betriebssystems.
